# EUROPÄISCHE PATENTSCHRIFT

(11) **EP 0 872 629 B1**
(45) Veröffentlichungstag und Bekanntmachung des Hinweises auf die Patenterteilung: **26.06.2002**
(21) Anmeldenummer: 98104892.9
(22) Anmeldetag: 18.03.1998
(51) Int. Cl.: F01L 1/02

(54) **Kettentrieb, insbesondere für Nebenantriebe von Brennkraftmaschinen**
Chain drive, in particular for ancillary drive in internal combustion engines
Entraînement par chaîne, en particulier pour accessoires de moteurs à combustion interne

(30) Priorität: 18.04.1997 DE 19716411
(43) Veröffentlichungstag der Anmeldung: 21.10.1998
(73) Patentinhaber: Bayerische Motoren Werke Aktiengesellschaft, 80788 München (DE)
(72) Erfinder: Reisinger, Walter, 4311 Schwertberg (AT); Föls, Roman, 3300 Amstetten (AT)

(56) Entgegenhaltungen:
- EP-A- 0 477 146
- WO-A-92/18754
- US-A- 4 848 183
- PATENT ABSTRACTS OF JAPAN vol. 8, no. 177 (M-317), 15.August 1984 & JP 59 069549 A (HONDA GIKEN KOGYO KK), 19.April 1984,

## Beschreibung

Die Erfindung bezieht sich nach dem Oberbegriff des Patentanspruches 1 auf einen aus der US 4 848 183 bekannten Kettentrieb, insbesondere für Nebenantriebe von Brennkraftmaschinen.

Bei diesem bekannten Kettentrieb einer Brennkraftmaschine dient ein Kettenrad auf einer Kurbelwelle von bekanntlich relativ großer Trägheitsmasse mittels einer bevorzugten Hülsen- und/oder Rollenkette dem Antrieb einer Nockenwelle oder einer Einspritzpumpenwelle von jeweils bekanntlich geringen Trägheitsmassen. Zur Vermeidung von Querschwingungen der Kettenteile zwischen dem antreibenden und dem angetriebenen Kettenrad sind in der Regel eine Führungseinrichtung sowie eine Dämpfungseinrichtung vorgesehen, weiter ist das angetriebene Kettenrad der Nockenwelle mit einem Torsionsdämper bzw. einem Drehschwingungstilger ausgerüstet.

Für einen Kettentrieb ist ferner bekannt, daß der Lauf einer Kette über ein Kettenrad kinematisch dem Lauf über ein Vieleck gleichzusetzen ist mit der Folge dynamischer Ungleichförmigkeiten. Dieser für Kettentriebe bekannte, sog. Polygoneffekt führt zu dynamischen Anregungen im Kettentrieb, die insbesondere im Hinblick auf eine nachteilige Geräuschentwicklung um so nachhaltiger sind, je größer der Unterschied .der Trägheitsmassen der mit dem Kettentrieb verbundenen Wellen ist.

Der Erfindung liegt die Aufgabe zugrunde, den gattungsgemäßen Kettentrieb so zu verbessern, daß die durch den Polygoneffekt bewirkten Anregungen wesentlich reduziert sind.

Diese Aufgabe ist mit dem Patentanspruch 1 in der Weise gelöst, daß der Tilger radial gegenphasig zu einer mittels des Polygoneffektes des Kettenrades auf der Welle mit der größeren Trägheitsmasse bewirkten Anregung der erstgenannten Welle im wesentlichen in Richtung der Verbindungslinie beider Wellen schwingend angeordnet ist.

Mit dem erfindungsgemäß bei der Drehung radial gegenphasig schwingenden Tilger ist in vorteilhafter Weise die Anregung der Welle mit der geringeren Trägheitsmasse durch den Polygoneffekt des Kettentriebes wesentlich reduziert und somit auch die Geräuschbildung deutlich verringert durch eine erfindungsgemäß ruhig gestellte Welle, die somit keinen Körperschall erzeugt.

In Ausgestaltung der Erfindung wird vorgeschlagen, daß der als Schwungring gestaltete Tilger über ein ringförmiges Federelement aus gummielastischem oder elastomerem Werkstoff drehfest mit dem Kettenrad verbunden ist, wobei der erfindungsgemäß radial stark beanspruchte Werkstoff mit einer hohen Dämpfung für eine breitbandige Frequenztilgung gewählt ist.

Der erfindungsgemäße Kettentrieb findet bevorzugt Verwendung bei einer Brennkraftmaschine, wobei die Welle mit der geringeren Trägheitsmasse eine Nockenwelle und/oder eine Einspritzpumpenwelle und die Welle mit der größeren Trägheitsmasse eine Kurbelwelle der Brennkraftmaschine ist.

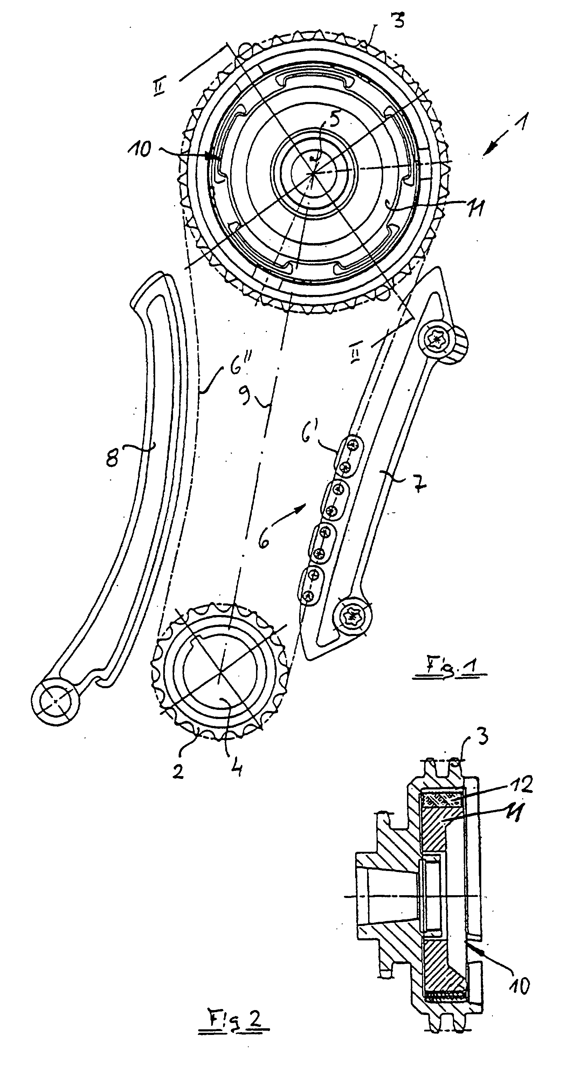

Die Erfindung ist anhand eines in der Zeichnung dargestellten Ausführungsbeispiels beschrieben. Es zeigt
- Figur 1: einen untersetzenden Kettentrieb mit einem dem angetriebenen Kettenrad zugeordneten Tilger,
- Figur 2: den Tilger der Figur 1 gemäß der Linie II - II im Schnitt.

Ein Kettentrieb 1, vorzugsweise verwendet für einen Nebenantrieb wie beispielsweise einen Ventiltrieb oder einen Einspritzpumpenantrieb einer nicht näher dargestellten Brennkraftmaschine, umfaßt Kettenräder 2 und 3 auf Wellen 4 und 5 mit unterschiedlichen Trägheitsmassen. Die mit dem Kettenrad 2 drehfest verbundene Welle 4 ist eine Kurbelwelle der nicht gezeigten Brennkraftmaschine und die mit dem Kettenrad 3 drehfest verbundene Welle 5 ist eine Nockenwelle des Ventiltriebs oder eine Einspritzpumpenwelle der nicht gezeigten Brennkraftmaschine. Die Kurbelwelle 4 weist bekanntlich eine relativ große Trägheitsmasse auf, wogegen die Nockenwelle 5 bzw. die Einspritzpumpenwelle 5 demgegenüber eine relativ geringe Trägheitsmasse aufweist. Weiter umfaßt der Kettentrieb 1 für die Kette 6 eine Führungseinrichtung 7 für das gezogene Kettentrum 6' sowie eine Spannschiene 8 für das Leertrum 6" der Kette 6.

In dem gemäß der bevorzugten Verwendung untersetzenden Kettentrieb 1 ist mit dem antreibenden Kettenrad 2 auf der Kurbelwelle 4 aufgrund der geringeren Zähnezahlen gegenüber der Zähnezahl des angetriebenen Kettenrades 3 ein ausgeprägter Polygoneffekt gegeben, der zu unerwünschten Anregungen im getriebenen Teil des Kettentriebes führt, insbesondere zu nachteiligen Geräuschbildungen. Die Ursache hierfür ist, daß der mit dem antreibenden Kettenrad 2 mit kleiner Zähnezahl gegebene Polygoneffekt über die Kette 6 an der getriebenen Welle 5 eine radiale Anregung in Richtung der Verbindungslinie 9 der beiden Welle 4 und 5 verursacht.

Zur wesentlichen Beseitigung dieser Anregung wird erfindungsgemäß vorgeschlagen, daß das Kettenrad 3 auf der Welle 5 mit der geringeren Trägheitsmasse einen im wesentlichen radial elastisch verlagerbar angeordneten Tilger 10 aufweist, der radial gegenphasig zu einer mittels des Polygoneffektes des Kettenrades 2 auf der Welle 4 mit der größeren Trägheitsmasse bewirkten Anregung der erstgenannten Welle 5 im wesentlichen in Richtung der Verbindungslinie 9 beider Wellen 4 und 5 schwingend angeordnet ist. In vorteilhafter Ausgestaltung des erfindungsgemäß im wesentlichen radial gegenphasig schwingenden Tilgers 10 ist dieser als Schwungring 11 gestaltet, der über ein ringförmiges Federelement 12 aus gummielastischem oder elastomerem Werkstoff drehfest mit dem Kettenrad 3 verbunden ist, wobei ein Werkstoff mit hoher Dämpfung für eine breitbandige Frequenztilgung gewählt ist.

Gegenüber im Stand der Technik bekannten, mit Kettenrädern kombinierten Torsionsdämpfern gemäß den Gegenständen der DE 37 39 336 C2 und der US 4,848,183 ist die vorbeschriebene Erfindung in einem Kettenrad 3 mit einem auf die Polygonfrequenz des anderen Kettenrades 2 abgestimmten Radial-Tilger 10 zu sehen, der zwecks breitbandiger Frequenzunterdrückung über einen Werkstoff hoher Dämpfung mit dem Kettenrad 3 in Verbindung steht.

Anstelle des ringförmigen Federelementes 12 aus gummielastischem oder elastomerem Werkstoff kann zur zentrischen Anordnung des Schwungringes 11 im Kettenrad 3 ein elastischer Wellring dienen, wie er beispielsweise aus der DE 43 41 370 A per se bekannt ist.

Eine weitere elastische Anordnung des Schwungringes 11 in dem Kettenrad 3 ist mittels über den Umfang verteilt angeordneter Hülsenfedern erreicht, wie diese beispielsweise aus der DE-PS 617 204 per se bekannt sind.

## Patentansprüche

1. Kettentrieb, insbesondere für Nebenantriebe von Brennkraftmaschinen,
- umfassend Kettenräder (2, 3) auf Wellen (4, 5) mit unterschiedlichen Trägheitsmassen, und
- einer Führungseinrichtung (7) und/oder einer Dämpfungseinrichtung (8) für ein Kettentrum (6', 6"), wobei
- das Kettenrad (3) auf der Welle (5) mit der geringeren Trägheitsmasse einen im wesentlichen radial elastisch verlagerbar angeordneten Tilger (10) aufweist,
**dadurch gekennzeichnet,**
- **daß** der Tilger (10) radial gegenphasig zu einer mittels des Polygoneffektes des Kettenrades (2) auf der Welle (4) mit der größeren Trägheitsmasse bewirkten Anregung der erstgenannten Welle (5) im wesentlichen in Richtung der Verbindungslinie (9) beider Wellen (4, 5) schwingend angeordnet ist.

2. Kettentrieb nach Anspruch 1, **dadurch gekennzeichnet,**
- **daß** der Tilger (10) einen Schwungring (11) umfaßt, der
- über ein ringförmiges Federelement (12) aus gummielastischem oder elastomerem Werkstoff drehfest mit dem Kettenrad (3) verbunden ist, wobei
- ein Werkstoff mit hoher Dämpfung für eine breitbandige Frequenzunterdrückung gewählt ist.

3. Kettentrieb nach Anspruch 1, **dadurch gekennzeichnet, daß** der Schwungring (11) des Tilgers (10) über einen elastischen Wellring in dem Kettenrad (3) zentriert angeordnet ist.

4. Kettentrieb nach Anspruch 1, **dadurch gekennzeichnet, daß** der Schwungring (11) des Tilgers (10) über Hülsenfedern in dem Kettenrad (3) zentriert angeordnet ist.

5. Kettentrieb nach einem der Ansprüche 1 bis 4, **dadurch gekennzeichnet,**
- **daß** die Welle (5) mit der geringeren Trägheitsmasse eine Nockenwelle und/oder eine Einspritzpumpenwelle und
- die Welle (4) mit der größeren Trägheitsmasse eine Kurbelwelle einer Brennkraftmaschine ist.

## Claims

1. A chain drive, especially for auxiliary drives of internal combustion engines,
- comprising chain wheels (2, 3) on shafts (4, 5) having different inertial masses and
- a guide device (7) and/or a damping device (8) for a chain run (6', 6"), wherein
- the chain wheel (3) on the shaft (5) having the lower inertial mass comprises an extinguisher (10) mounted so as to be elastically movable substantially in the radial direction,
**characterised in that**
- the extinguisher (10) is disposed so as to vibrate, substantially in the direction of the line (9) connecting the two shafts (4, 5), radially in phase opposition to the excitation of the first-mentioned shaft (5) caused by the polygon effect of the chain wheel (2) on the shaft (4) having the greater inertial mass.

2. A chain drive according to claim 1, **characterised in that**
- the extinguisher (10) comprises a rotating ring (11) which
- is connected co-rotatably to the chain wheel (3) via an annular spring element (12) made of rubber-elastic or elastomeric material, wherein
- a material is chosen with a strong damping effect for suppressing a wide range of frequencies.

3. A chain drive according to claim 1, **characterised in that** the rotating ring (11) of the extinguisher (10) is centred in the chain wheel (3) via an elastic corrugated ring.

4. A chain drive according to claim 1, **characterised in that** the rotating ring (11) of the extinguisher (10) is centred in the chain wheel (3) via sleeve springs.

5. A chain drive according to any of claims 1 to 4, **characterised in that**
- the shaft (5) having the lower inertial mass is a camshaft and/or an injection-pump shaft and
- the shaft (4) having the greater inertial mass is a crankshaft of an internal combustion engine.

## Revendications

1. Entraînement à chaîne notamment pour l'entraînement d'accessoires de moteurs à combustion interne comprenant :
- des pignons (2, 3) portés par des arbres (4, 5) et ayant des masses d'inertie différentes,
- une installation de guidage (7) et/ou une installation d'amortissement (8) pour un brin de chaîne (6', 6"),
- le pignon (3) de l'arbre (5) de plus faible masse d'inertie présentant un absorbeur (10) monté de manière mobile essentiellement élastiquement dans la direction radiale,
**caractérisé en ce que**
l'absorbeur (10) est monté oscillant, radialement en opposition de phase par rapport à une excitation produite par l'effet de polygone du pignon à chaîne (2) sur l'arbre (4) de plus grande masse d'inertie, pour le premier arbre (5), essentiellement dans la direction de liaison (9) des deux arbres (4, 5).

2. Entraînement à chaîne selon la revendication 1,
**caractérisé en ce que**
l'absorbeur (10) comprend un anneau d'inertie (11) qui
- est relié par un élément à ressort annulaire (12) en une matière élastomère ou ayant l'élasticité du caoutchouc, solidairement en rotation au pignon à chaîne (3), et
- on choisit un matériau à fort amortissement pour assurer une suppression de fréquence dans une bande large.

3. Entraînement à chaîne selon la revendication 1,
**caractérisé en ce que**
l'anneau d'inertie (11) de l'absorbeur (10) est centré dans le pignon à chaîne (3) par l'intermédiaire d'un anneau ondulé élastique.

4. Entraînement à chaîne selon la revendication 1,
**caractérisé en ce que**
l'anneau d'inertie (11) de l'absorbeur (10) est centré dans le pignon à chaîne (3) par l'intermédiaire de ressorts en forme de manchons.

5. Entraînement à chaîne selon l'une quelconque des revendications 1 à 4,
**caractérisé en ce que**
- l'arbre (5) de faible masse d'inertie est l'arbre à cames et/ou celui d'une pompe d'injection, et
- l'arbre (4) de grande masse d'inertie est le vilebrequin d'un moteur à combustion interne.
